# EUROPÄISCHE PATENTANMELDUNG

(11) **EP 1 624 207 A2**
(43) Veröffentlichungstag der Anmeldung: **08.02.2006**
(21) Anmeldenummer: 05016374.0
(22) Anmeldetag: 28.07.2005
(51) Int. Cl.: F16C 29/04

(54) **Linearlagereinheit**

(30) Priorität: 03.08.2004 DE 102004037661
(71) Anmelder: AB SKF, S-415 50 Göteborg (SE)
(72) Erfinder: Andersson, Leif A., 74924 Neckarbischofsheim (DE)
(74) Vertreter: Kohl, Thomas

(57) **Zusammenfassung**

Die Erfindung betrifft eine Linearlagereinheit (1) mit einem Obertisch (2), der linear verschieblich auf einem Untertisch (3) angeordnet ist. Um eine einfache Konstruktion und ein günstiges Führungsverhalten der Linearlagereinheit (1) zu erreichen, weist der im wesentlichen plattenförmig ausgebildete Obertisch (2) in seinem unteren Bereich (4) mindestens zwei Führungsflächen (5', 5", 6', 6") für Wälzkörper (7) auf, wobei der Untertisch (3) an seiner Seite oder in seinem oberen Bereich (8) mindestens zwei Führungsflächen (9', 9", 10', 10") für Wälzkörper (7) aufweist, die zu den Führungsflächen (5', 5", 6', 6") des Obertisches (2) korrespondieren. Weiterhin sind die Wälzkörper (7) in einem linear zum Obertisch (2) und Untertisch (3) verschieblichen Käfig (11) angeordnet, wobei die Wälzkörper (7) als Rollen ausgebildet sind und zwei in Verschieberichtung aufeinanderfolgende Rollen jeweils im wesentlichen um 90° verdreht angeordnet sind und wobei jeder Käfig (11) mit einer Einrichtung (12) versehen ist, mit der Schlupf zwischen den Führungsflächen und dem Käfig (11) verhindert wird.

## Beschreibung

Die Erfindung betrifft eine Linearlagereinheit mit einem Obertisch, der linear verschieblich auf einem Untertisch angeordnet ist.

Linearlagereinheiten dieser Art sind im Stand der Technik hinlänglich bekannt. Die **DE 33 27 741 A1** offenbart einen Lagerkörper für ein Linearlager mit einem im wesentlichen U-förmigen Querschnitt, wobei zwei seitlich angeordnete Schürzenteile vorgesehen sind, zwischen denen ein im unteren Teil gelegener mittlerer Hohlraum ausgebildet ist, wobei in den am Innenumfang gelegenen Seitenflächen der Schürzen gegenüberliegende Ausnehmungen ausgebildet sind. An den beiden Seiten sind in Axialrichtung verlaufende Kugelrolloberflächen angeordnet. Vorgesehen ist hier, dass die verschiedenen in Axialrichtung verlaufenden Kugelrolloberflächen auf den beiden Seiten der Ausnehmung durch gleichzeitiges Schleifen mit einer Schleifscheibe hergestellt sind. Insoweit ergibt sich ein linear verschiebliches Teil, das mit relativ hoher Präzision hinsichtlich der Geometrie der Laufbahnen gefertigt werden kann.

Aus der **DE 31 48 933 A1** ist ein Teleskopschienensystem bekannt, das aus einer C-förmigen Außenschiene, einer darin geführten Mittelschiene, einer I-förmigen Innenschiene und dazwischenliegenden Lagerkugelreihen besteht. Vorgesehen ist hier, dass die Lagerkugeln ohne Kugelkäfige verlegt sind und abwechselnd aus Stahl und Kunststoff bestehen. Auch mit dieser Lösung kann ein tischförmig ausgebildetes und linear bewegliches Element hergestellt werden, das bereits gute Führungseigenschaften aufweist. Zur Lagerung eines Obertisches relativ zu einem Untertisch kommen zumeist jedoch Linearführungen zum Einsatz, die paarweise eingesetzt werden und jeweils aus zwei in Längsrichtung zueinander verschiebbaren Führungsschienen mit prismenförmig oder ähnlich ausgebildeten Laufbahnen bestehen. Auf den Führungsschienen wälzen in einem Käfig geführte Wälzkörper ab, wobei insbesondere vorgesehen sein kann, dass eine Zwangsführung des Käfigs über einen Zahnradmechanismus erfolgt, was Schlupf verhindern soll. Eine solche Lösung ist beispielsweise in der **DE 198 15 525 A1** beschrieben.

Bei der Herstellung einer Linearlagereinheit, die einen Obertisch relativ verschiebbar zu einem Untertisch lagert, sind mitunter sowohl an die Wirtschaftlichkeit als auch an die Präzision so hohe Anforderungen zu stellen, dass die vorbekannten Lösungen hierfür nicht ausreichend sind. Linearlagerkäfigsysteme mit umlaufenden Wälzkörpern kommen hier zumeist nicht in Betracht, da es beim Eintritt der Wälzkörper in den Lastbereich zumeist zu Pulsationen kommt, die sich negativ auf das Führungsverhalten des Lineartisches bemerkbar machen. Weiterhin sind Einschränkungen bezüglich der Führungsgenauigkeit und der Steifigkeit zu machen; dem ist zumeist nur dadurch entgegen zu wirken, dass ein sehr aufwendiges System eingesetzt wird, das jedoch entsprechende Kosten verursacht.

Im Lichte der vorbekannten Lösungen liegt der Erfindung die Aufgabe zugrunde, eine Linearlagereinheit der gattungsgemäßen Art zu schaffen, die die vorstehenden Nachteile überwindet. Die Lageranordnung soll also einfach herstellbar sein und damit bei Ihrer Produktion keine hohen Kosten verursachen. Weiterhin soll sich die Einheit durch hohe Präzision und einen möglichst steifen Aufbau auszeichnen. Die Ablaufgenauigkeit bei der Linearbewegung soll gleichermaßen hoch sein.

Die Lösung dieser Aufgabe durch die Erfindung wird durch eine Linearlagereinheit mit einem Obertisch geschaffen, der linear verschieblich auf einem Untertisch angeordnet ist,
wobei der im wesentlichen plattenförmig ausgebildete Obertisch in seinem unteren Bereich mindestens zwei Führungsflächen für Wälzkörper aufweist,
wobei der Untertisch an seiner Seite oder in seinem oberen Bereich mindestens zwei Führungsflächen für Wälzkörper aufweist, die zu den Führungsflächen des Obertisches korrespondieren,
wobei die Wälzkörper in einem linear zum Obertisch und Untertisch verschieblichen Käfig angeordnet sind,
wobei die Wälzkörper als Rollen ausgebildet sind und zwei in Verschieberichtung aufeinanderfolgende Rollen jeweils im wesentlichen um 90° verdreht angeordnet sind und
wobei jeder Käfig mit einer Einrichtung versehen ist, mit der Schlupf zwischen den Führungsflächen und dem Käfig verhindert wird.

Mit der Kombination dieser an sich vorbekannten Merkmale wird eine Linearlagereinheit geschaffen, die sich durch besondere Vorteile auszeichnet:

Insgesamt wird eine monolithisch ausgebildete Linearlagereinheit geschaffen, die sich durch einen kompakten und steifen Aufbau auszeichnet. Die Einheit weist wenige Bauteile auf, so dass sie preiswert herstellbar ist und hohen Anforderungen an die Steifigkeit genügt.

Deutliche Kostenvorteile bei der Fertigung ergeben sich dadurch, dass keine Montageflächen mehr für Führungsschienen notwendig sind, an denen diese festgeschraubt werden müssten. Die Anlageflächen für die Wälzkörper bzw. für Führungsschienen sind direkt in die Geometrie des Obertisches bzw. des Untertisches integriert.

Der Aufwand bei der Montage wird dadurch gleichermaßen wesentlich verringert, da weniger Teile benötigt werden und entsprechender Justageaufwand entfällt.

Durch die Reduzierung der zum Einsatz kommenden Teile wird sowohl die Führungsgenauigkeit der Linearlagereinheit als auch deren Steifigkeit signifikant erhöht, verglichen damit, dass gemäß dem Stand der Technik separate Bauteile zum Einsatz kommen.

Die spezifische Definition der Anordnung und Führung der Wälzkörper führt weiterhin dazu, dass keine Ein- und Auslaufstöße von Wälzkörpern auftreten können, womit sich eine erhöhte Konstanz der Steifigkeit ergibt.

Weiterhin wird durch die vorgesehene Einrichtung zur Verhinderung von Schlupf sichergestellt, dass ein Käfigwandern nicht stattfinden kann, was sich gleichermaßen positiv auf die Führungsgenauigkeit der Linearlagereinheit auswirkt.

Eine Fortbildung der Erfindung sieht vor, dass die Führungsflächen für die Wälzkörper in den Grundkörper des Obertisches bzw. des Untertisches eingeschliffen sind.

Weiterhin kann vorgesehen werden, dass die Einrichtung zur Verhinderung des Schlupfs mindestens ein mit dem Käfig verbundenes Zahnrad aufweist, das mit an den Führungsflächen angeordneten Zahnstangen kämmt.

Weiterhin kann vorgesehen werden, dass Obertisch, Untertisch und Käfig samt Wälzkörper so angeordnet sind, dass in jeder Relativposition des Obertisches zum Untertisch alle Wälzkörper mit den Führungsflächen der beiden Tische im Eingriff sind.

Das Erfindungskonzept vereinigt die Vorteile der vorbekannten Profilschienen, was die gute Montierbarkeit und Standardisierung anbelangt, mit denjenigen von Kreuzrollenführungen zu einer Tischeinheit, die sich speziell für Anwendungen im Kurzhubbereich anbietet. Die Einrichtung zur Verhinderung von Schlupf verbessert das Führungsverhalten signifikant.

Die vorgeschlagene Linearlagereinheit zeichnet sich also durch eine hohe Steifigkeit und eine integrale Bauweise aus, die ein sehr gleichförmiges Laufverhalten sicherstellt, da alle Rollen permanent im Eingriff sind. Durch fehlende Rollenumläufe ist keine Pulsation in Steifigkeit und Ablaufgenauigkeit zu befürchten. Weiterhin wird zuverlässig ein Käfigwandern verhindert, was die Linearführung weiter verbessert.

In der Zeichnung ist ein Ausführungsbeispiel der Erfindung dargestellt. Es zeigen:
- Figur 1: den Schnitt durch eine Linearlagereinheit senkrecht zur linearen Bewegungsrichtung,
- Figur 2: einen Teilausschnitt der Linearlagereinheit mit Käfig und Einrichtung zur Verhinderung von Schlupf und
- Figur 3: die Einrichtung zur Verhinderung von Schlupf in Ansicht A gemäß Figur 2.

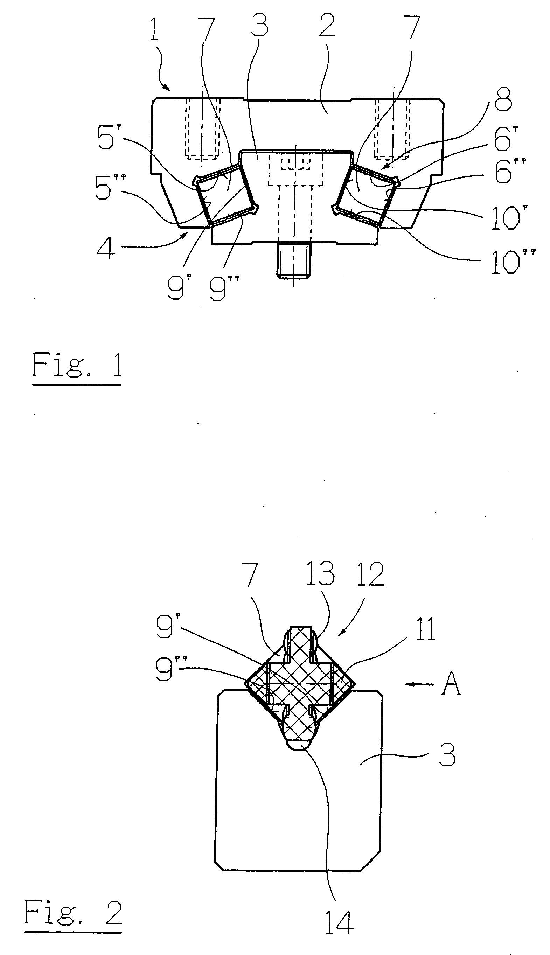

Die in Figur 1 schematisch dargestellte Linearlagereinheit 1 besteht aus einem plattenförmig ausgebildeten Obertisch 2 sowie einem Untertisch 3, wobei beide Tische 2, 3 relativ zueinander in eine lineare Verschieberichtung bewegbar sind; die lineare Verschieberichtung steht in Figur 1 senkrecht auf der Zeichenebene.

Im unteren Bereich 4 des Obertisches 2 sind Führungsflächen 5' und 5" bzw. 6' und 6" angeordnet. Diese Führungsflächen sind direkt in das metallische Material des Obertisches 2 eingeschliffen, was mit hoher Präzision und in einfacher Weise erfolgen kann, so dass die Anordnung der Führungsflächen 5', 5", 6', 6" fertigungstechnisch keine Probleme bereitet.

Der Untertisch 3 weist in ähnlicher Weise in seinem oberen Bereich 8 bzw. in seinen Seitenbereichen Führungsflächen 9', 9" sowie 10', 10" auf, die gleichermaßen direkt in des metallische Material des Untertisches 3 eingeschliffen sind.

Im montierten Zustand von Obertisch 2 und Untertisch 3 sind Wälzkörper 7 zwischen die Führungsflächen 5', 5", 6', 6", 9', 9", 10' sowie 10" angeordnet. Es handelt sich dabei jeweils um Zylinderrollen, wobei jeweils zwei in Verschieberichtung aufeinanderfolgende Rollen um 90° zueinander verdreht angeordnet sind. Es ergibt sich daher eine Kreuzrollenlageranordnung.

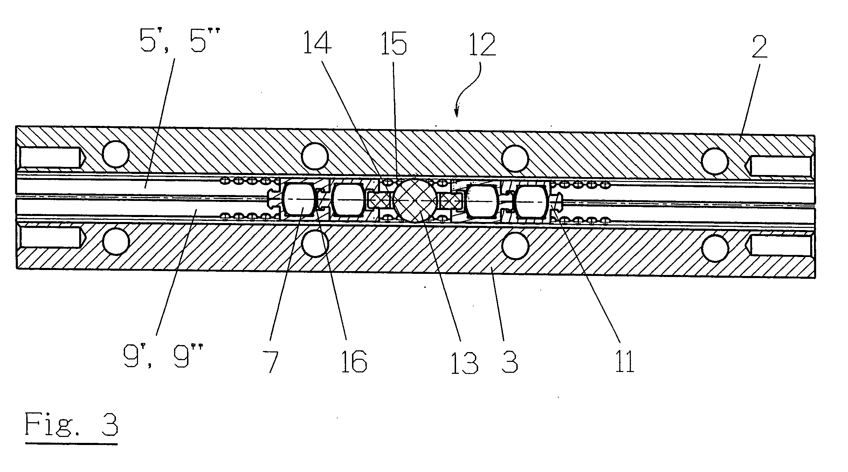

Zur Führung der Wälzkörper 7 ist ein Käfig 11 vorgesehen, der in den Figuren 2 und 3 zu sehen ist. Dieser Käfig 11 ist als sich linear erstreckendes Element ausgebildet und weist eine der Anzahl der Wälzkörper 7 entsprechende Anzahl Käfigtaschen 16 auf. Eine Rollenumlenkung erfolgt nicht.

Zur Verbesserung der Führung der Wälzkörper an den Führungsflächen ist eine Einrichtung 12 zur Verhinderung von Schlupf vorgesehen. Diese Vorrichtung ist in Figur 2 und Figur 3 zu erkennen. Sie weit ein Zahnrad 13 auf, das drehbar aber ortsfest mit dem Käfiggrundkörper verbunden ist. Das Zahnrad 13 kämmt mit Zahnstangen 14 und 15 die in den Untertisch 3 bzw. den Obertisch 2 eingearbeitet sind oder mit diesen verbunden sind.

Bei linearer Verschiebebewegung des Obertisches 2 relativ zum Untertisch 3 kommt es daher zu einer definierten Bewegung des Käfigs 11 und damit zu einer definierten Führung der einzelnen Wälzkörper 7 in den Käfigtaschen 16.

Das Zusammenwirken der einzelnen erwähnten Merkmale führt insgesamt zu einer sehr stabil und präzise gelagerten Tischeinheit, bei der der Obertisch besonders günstig für den Kurzhubbereich relativ zum Untertisch geführt wird.

### Bezugszeichenliste

- 1: Linearlagereinheit
- 2: Obertisch
- 3: Untertisch
- 4: unterer Bereich des Obertisches
- 5': Führungsfläche
- 5": Führungsfläche
- 6': Führungsfläche
- 6": Führungsfläche
- 7: Wälzkörper
- 8: oberer Bereich des Untertisches
- 9': Führungsfläche
- 9": Führungsfläche
- 10': Führungsfläche
- 10": Führungsfläche
- 11: Käfig
- 12: Einrichtung zur Verhinderung von Schlupf
- 13: Zahnrad
- 14: Zahnstange
- 15: Zahnstange
- 16: Käfigtasche

## Patentansprüche

1. Linerlagereinheit (1) mit einem Obertisch (2), der linear verschieblich auf einem Untertisch (3) angeordnet ist,
wobei der im wesentlichen plattenförmig ausgebildete Obertisch (2) in seinem unteren Bereich (4) mindestens zwei Führungsflächen (5', 5", 6', 6") für Wälzkörper (7) aufweist,
wobei der Untertisch (3) an seiner Seite oder in seinem oberen Bereich (8) mindestens zwei Führungsflächen (9', 9", 10', 10") für Wälzkörper (7) aufweist, die zu den Führungsflächen (5', 5", 6', 6") des Obertisches (2) korrespondieren,
wobei die Wälzkörper (7) in einem linear zum Obertisch (2) und Untertisch (3) verschieblichen Käfig (11) angeordnet sind,
wobei die Wälzkörper (7) als Rollen ausgebildet sind und zwei in Verschieberichtung aufeinander folgende Rollen jeweils im wesentlichen um 90° verdreht angeordnet sind und
wobei jeder Käfig (11) mit einer Einrichtung (12) versehen ist, mit der Schlupf zwischen den Führungsflächen (5', 5", 6', 6", 9', 9", 10', 10") und dem Käfig (11) verhindert wird.

2. Linearlagereinheit nach Anspruch 1, **dadurch gekennzeichnet, dass** die Führungsflächen (5', 5", 6', 6", 9', 9", 10', 10") für die Wälzkörper (7) in den Grundkörper des Obertisches (2) bzw. Untertisches (3) eingeschliffen sind.

3. Linearlagereinheit nach Anspruch 1 oder 2, **dadurch gekennzeichnet, dass** die Einrichtung (12) zur Verhinderung des Schlupfs mindestens ein mit dem Käfig (11) verbundenes Zahnrad (13) aufweist, das mit an den Führungsflächen (5', 5", 6', 6", 9', 9", 10', 10") angeordneten Zahnstangen (14, 15) kämmt.

4. Linearlagereinheit nach einem der Ansprüche 1 bis 3, **dadurch gekennzeichnet, dass** Obertisch (2), Untertisch (3) und Käfig (11) samt Wälzkörpern (7) so angeordnet sind, dass in jeder Relativposition des Obertisches (2) zum Untertisch (3) alle Wälzkörper (11) mit den Führungsflächen (5', 5", 6', 6", 9', 9", 10', 10") der beiden Tische (2, 3) im Eingriff sind.
